# FASCICULE DE BREVET EUROPEEN

(11) **EP 2 306 096 B1**
(45) Date de publication et mention de la délivrance du brevet: **12.04.2017**
(21) Numéro de dépôt: 10354052.2
(22) Date de dépôt: 21.09.2010
(51) Int. Cl.: F24D 3/08, F24D 11/00, F24D 19/10, F24D 12/02

(54) **Installation solaire mixte de chauffage et d'eau chaude sanitaire**
Heizsystem für Brauchwasser und Raumheizung mit zwei Wärmequellen
Heating system for hot water and space heating comprising two different heat sources

(30) Priorité: 22.09.2009 FR 0904505
(43) Date de publication de la demande: 06.04.2011
(73) Titulaire: Solisart, 73110 Villaroux (FR)
(72) Inventeur: Godin, Olivier, 73110 Villaroux (FR)
(74) Mandataire: Hecké, Gérard

(56) Documents cités:
- DE-A1- 19 830 867
- DE-U1- 29 619 790
- DE-U1-202005 000 868
- GB-A- 2 431 228
- JP-A- 58 160 745

## Description

### Domaine technique de l'invention

L'invention est relative à une installation mixte de chauffage solaire et de production d'eau chaude sanitaire, comportant un circuit hydraulique à fluide caloporteur, raccordé à :
- un système de production d'énergie solaire ayant au moins un capteur solaire thermique,
- une source d'appoint insérée dans un circuit hydraulique d'appoint,
- un ballon de stockage renfermant une première zone de chauffage solaire, et une deuxième zone de chauffage d'appoint,
- et des moyens hydrauliques de guidage comprenant une première vanne de distribution pour diriger le fluide caloporteur circulant dans des circuits élémentaires de chauffage vers l'énergie solaire ou vers l'énergie d'appoint.

### État de la technique

Les installations mixtes de chauffage et de production chaude sanitaire solaire permettent une certaine économie d'énergie. Mais ces économies d'énergie ont besoin d'être augmentées pour améliorer le retour sur investissement et atteindre un marché de masse.

Tous les systèmes connus ont au moins un des inconvénients suivants :
- L'énergie solaire doit traverser la chaudière de la source d'appoint (voir documents BE 1017461 et EP 1983267). Les déperditions de l'appoint réduisent l'efficacité et l'économie d'énergie. Un autre inconvénient est la limitation de la température de stockage dans le ballon à la température maximum admissible par l'appoint. L'énergie stockée et l'économie d'énergie sont alors plus faibles.
- L'énergie de la source d'appoint doit passer d'abord dans le ballon de stockage avant les zones de chauffage (voir document WO 2008/051646). Cela réduit l'efficacité d'énergie. Cela limite l'intérêt du refroidissement si la source d'appoint est une pompe à chaleur.
- Tous les retours de zones à chauffer par l'appoint ne reviennent pas sur le même tuyau du même côté de la vanne trois voies de distribution. Il est alors impossible de réaliser le comptage énergétique avec un seul débitmètre et deux sondes de température.

Le document JP5860745 décrit une installation mixte de chauffage solaire et de production d'eau chaude sanitaire comportant un système de production d'énergie solaire, et une source d'appoint, laquelle est formée par un ballon de stockage dans lequel est intégrée la source de chaleur (par exemple un brûleur de chaudière). Deux vannes de circulation à trois voies sont nécessaires dans le circuit principal de l'installation. Il est impossible de chauffer la zone à chauffer avec la source d'appoint sans passer par le ballon, ce qui est néfaste pour le rendement de la chaudière. D'autre part, l'installation ne permet pas de diriger le fluide en provenance des capteurs directement dans le ballon d'appoint. Une autre différence est que l'installation ne permet pas à l'énergie venant des capteurs solaires d'aller en même temps dans le ballon d'appoint et la zone à chauffer.

### Objet de l'invention

L'objet de l'invention consiste à réaliser une installation solaire mixte de chauffage et de production d'eau chaude sanitaire permettant d'améliorer l'économie d'énergie, et de simplifier le circuit hydraulique pour le comptage de l'énergie et le basculement du solaire vers l'appoint.

L'installation de chauffage selon l'invention est caractérisée en ce que les circuits élémentaires de chauffage, et le circuit hydraulique d'appoint sont tous raccordés en dérivation du même côté de la vanne de distribution pour que l'énergie solaire en provenance du capteur solaire thermique puisse chauffer les zones de chauffage sans passer par la source d'appoint, et que la source d'appoint puisse alimenter lesdites zones de chauffage sans passer dans le ballon de stockage.

La première vanne de distribution est raccordée à la sortie des circuits élémentaires de chauffage par un tuyau de sortie commune sur lequel est monté un débitmètre unique pour le comptage énergétique en provenance de l'énergie solaire et de l'énergie d'appoint. Il suffit de placer une première sonde de température à l'entrée des circuits élémentaires de chauffage, et une deuxième sonde de température sur le tuyau inférieur avant le débitmètre.

La source d'appoint est raccordée à l'entrée des circuits élémentaires de chauffage, et à l'une des sorties de la première vanne de distribution.

Selon un premier mode de réalisation, le capteur solaire thermique est raccordé directement à l'entrée des circuits élémentaires de chauffage et est en liaison avec l'autre sortie de la première vanne de distribution.

Selon un deuxième mode de réalisation, le capteur solaire thermique est raccordé à l'entrée des circuits élémentaires de chauffage et est en liaison avec une deuxième vanne de distribution, raccordée soit au ballon de stockage principal, soit à un ballon de stockage supplémentaire. La deuxième vanne de distribution est alors disposée en série avec la première vanne de distribution.

Selon une caractéristique de l'invention, le ballon de stockage est du type à accumulation, renfermant à la partie inférieure un premier échangeur thermique raccordé au capteur solaire thermique dans un premier circuit hydraulique solaire, et à la partie supérieure un deuxième échangeur thermique inséré dans un circuit hydraulique d'appoint raccordé en parallèle avec les circuits élémentaires de chauffage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente schématiquement une installation solaire mixte de chauffage et d'eau chaude sanitaire selon l'invention ;
- les figures 2 à 4 montrent diverses variantes de réalisation de la figure 1.

### Description détaillée de l'invention

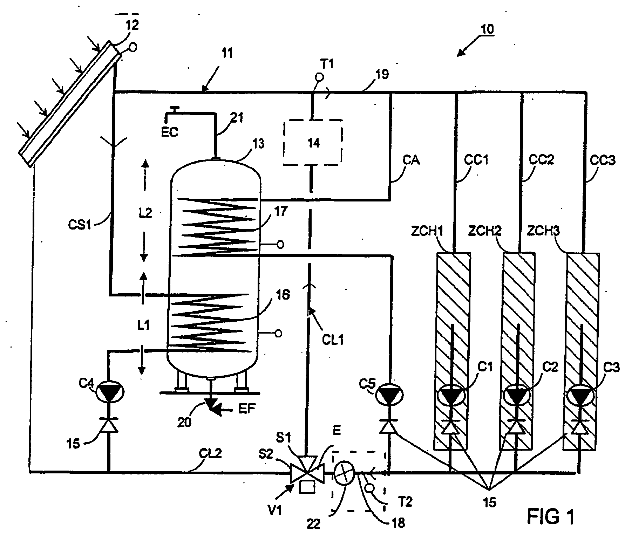

En référence à la figure 1, une installation de chauffage 10 d'un local ou d'une maison, comporte un circuit hydraulique 11 de chauffage et de production d'eau chaude sanitaire au moyen de l'énergie solaire et d'une énergie d'appoint.

Le circuit hydraulique 11 est raccordé à au moins un capteur solaire thermique 12 destiné à capter l'énergie solaire pour réchauffer un fluide caloporteur lors de son passage dans le capteur 12. Le circuit hydraulique 11 comporte en plus un ballon de stockage 13, une source d'appoint 14 et des moyens de guidage pour diriger le fluide caloporteur circulant dans des zones de chauffage ZCH1, ZCH2, ZCH3, vers l'énergie solaire ou vers l'énergie d'appoint.

Le fluide caloporteur peut être de l'eau glycolée, ou tout autre liquide mélangé avec de l'antigel.

Les zones de chauffage ZCH1, ZCH2, ZCH3 sont des émetteurs de chaleur à base de planchers chauffants et/ou de radiateurs hydrauliques répartis dans des circuits élémentaires de chauffage CC1, CC2, CC3 raccordés en parallèle au circuit hydraulique 11 principal. Dans chaque circuit élémentaire de chauffage CC1, CC2, CC3 se trouve un circulateur C1, C2, C3 entraîné par un moteur électrique à vitesse fixe ou variable. Un clapet anti-retour 15 est connecté en série avec chaque circulateur C1, C2, C3.

La source d'appoint 14 permet d'apporter un complément d'énergie à l'énergie solaire, et peut être une pompe à chaleur, ou une chaudière de tout type, notamment à fuel, gaz, électrique ou à bois.

Le ballon de stockage 13 sert à stocker les calories, et est du type à accumulation dans le cas de la figure 1. L'eau chauffée est de l'eau sanitaire, l'eau froide EF entrant à la base du ballon 13, et l'eau chaude EC étant disponible au sommet. Le ballon de stockage 13 renferme un premier échangeur thermique 16 à la partie inférieure, et un deuxième échangeur thermique 17 à la partie supérieure.

Le premier échangeur thermique 16 du ballon de stockage 13 est raccordé hydrauliquement au capteur solaire thermique 12 à travers un circulateur C4 et un clapet anti-retour 15, l'ensemble étant branché dans un premier circuit hydraulique solaire CS1 parcouru par le fluide caloporteur. L'eau sanitaire dans la première zone de chauffage L1 du ballon de stockage 13 est ainsi réchauffée par l'énergie solaire issue du capteur solaire thermique 12.

Le deuxième échangeur thermique 17 du ballon de stockage 13 délimite à la partie supérieure une deuxième zone de chauffage L2 du ballon 13 par la source d'appoint 14. Le deuxième échangeur thermique 17 se trouve inséré dans un circuit hydraulique d'appoint CA raccordé en parallèle avec les circuits élémentaires de chauffage CC1, CC2, CC3. Un circulateur C5 et un clapet anti-retour 15 sont également connectés dans le circuit hydraulique d'appoint CA.

Les moyens de guidage du fluide caloporteur dans le circuit hydraulique 11 comportent dans le cas de la figure 1, une première vanne de distribution V1 du type à trois voies permettant de diriger le fluide caloporteur vers le solaire ou l'appoint. L'entrée E de la première vanne de distribution V1 est en liaison par un tuyau inférieur 18 unique avec des piquages reliés d'un même côté aux clapets anti-retour 15 des différents circuits élémentaires de chauffage CC1, CC2, CC3. L'une des sorties S1 de la première vanne de distribution V1 est raccordée à la source d'appoint 14 par une conduite de liaison CL1, et l'autre sortie S2 est reliée par une conduite de liaison CL2 au capteur solaire thermique 12. Les piquages opposés des circuits élémentaires de chauffage CC1, CC2, CC3 sont tous reliés par un tuyau supérieur 19 à la source d'appoint 14 et au capteur solaire thermique 12.

On remarque que les circuits élémentaires de chauffage CC1, CC2, CC3 et le circuit hydraulique d'appoint CA sont raccordés en dérivation sur les tuyaux 18, 19, en étant situés du même côté de la vanne de distribution V1. La source d'appoint 14 est branchée entre le tuyau supérieur 19 et la sortie S1 de la vanne de distribution V1. Le capteur solaire thermique 12 est raccordé en parallèle d'une part aux circuits élémentaires de chauffage CC1, CC2, CC3 à travers la vanne de distribution V1, et d'autre part au circuit hydraulique solaire CS incluant le premier échangeur thermique 16.

Le même fluide caloporteur circule dans les circuits élémentaires de chauffage CC1, CC2, CC3, dans le capteur solaire thermique 12, et dans les échangeurs thermiques 16, 17 du ballon de stockage 13.

Le fonctionnement de l'installation de chauffage 10 selon la figure 1 est le suivant :
Pour la production d'eau chaude sanitaire dans le ballon de stockage 13, l'eau froide EF sanitaire entre dans le ballon 13 par le bas à travers une tubulure d'admission 20, et l'eau chaude EC en sort par le haut à travers une tubulure d'échappement 21. L'eau sanitaire est chauffée dans la première zone de chauffage L1 par le premier échangeur thermique 16 couplé au capteur solaire thermique 12, et dans la deuxième zone de chauffage L2 par le deuxième échangeur thermique 17 du circuit hydraulique d'appoint CA.

La vanne de distribution V1 a pour fonction de diriger le fluide caloporteur vers le capteur solaire thermique 12, ou vers la source d'appoint 14. Elle permet de choisir la source d'énergie.

Le capteur solaire thermique 12 permet de chauffer directement les deux zones de chauffage L1 et L2 du ballon de stockage 13, ainsi que les zones de chauffage ZCH1, ZCH2, ZCH3 des circuits élémentaires de chauffage CC1, CC2, CC3. La vanne de distribution V1 se trouve dans une première position faisant communiquer l'entrée E et la sortie S2. L'autre sortie S1 de la vanne de distribution V1 est alors fermée, obligeant le retour du fluide caloporteur vers le capteur solaire thermique 12 à travers la conduite de liaison CL2. Le fluide caloporteur, après avoir été réchauffé dans le capteur solaire thermique 12, se répartit ainsi dans l'échangeur thermique 16 du premier circuit hydraulique solaire CS1, dans l'autre échangeur thermique 17 du circuit hydraulique d'appoint CA, et dans les circuits élémentaires de chauffage CC1, CC2, CC3, tous ces circuits étant raccordés en parallèle. Dans ce cas, l'énergie solaire peut chauffer la deuxième zone de chauffage L2 du ballon de stockage 13 sans passer par la source d'appoint 14.

La source d'appoint 14 peut aussi être activée séparément en l'absence d'énergie solaire. La vanne de distribution V1 est basculée vers une deuxième position faisant communiquer l'entrée E et la sortie S1. L'autre sortie S2 de la vanne de distribution V1 est alors fermée, obligeant le retour du fluide caloporteur vers la source d'appoint 14. Les zones de chauffage ZCH1, ZCH2, ZCH3 des circuits élémentaires de chauffage CC1, CC2, CC3 en dérivation, sont alors chauffées directement par la source d'appoint 14 sans que le fluide caloporteur passe dans le ballon de stockage 13. L'eau sanitaire dans le ballon de stockage 13 est réchauffée par l'énergie d'appoint grâce à l'échangeur thermique 17 parcouru par le fluide caloporteur du circuit d'appoint CA.

Le chauffage direct des zones de chauffage ZCH1, ZCH2, ZCH3 permet une économie d'énergie en supprimant les pertes supplémentaires de calories liées au passage dans des composants hydrauliques. Le rendement calorifique est ainsi amélioré.

Etant donné que les circuits élémentaires de chauffage CC1, CC2, CC3, et le circuit hydraulique d'appoint CA sont tous raccordés en dérivation du même côté de la vanne de distribution V1, il est possible de monter un débitmètre 22 sur le tuyau inférieur 18 pour assurer le comptage énergétique de toutes les zones de chauffage ZCH1, ZCH2, ZCH3. Une première sonde de température T1 est placée sur le tuyau supérieur 19, et une deuxième sonde de température T2 est placée sur le tuyau inférieur 18.

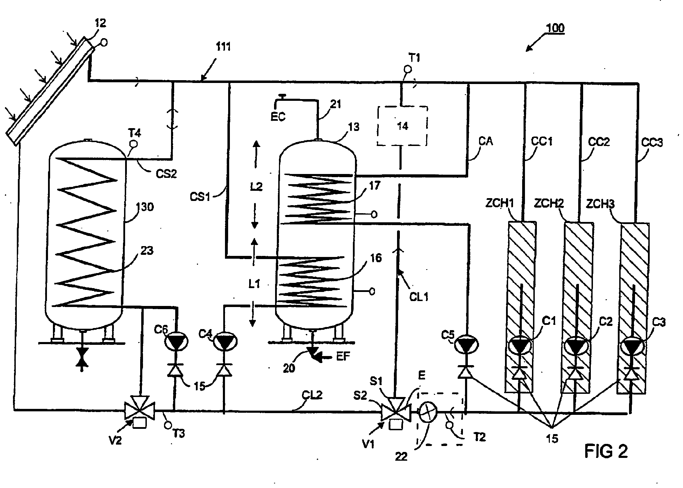

Dans les variantes illustrées aux figures 2 à 5, les mêmes numéros de repères seront utilisés pour désigner des pièces identiques ou similaires.

Dans l'exemple de la figure 2, l'installation de chauffage 100 possède un circuit hydraulique 111 identique à celui de la figure 1, avec en plus un ballon de stockage 130 supplémentaire agencé entre le capteur solaire thermique 12 et le premier ballon de stockage 13. Le ballon de stockage 130 supplémentaire est rempli d'eau morte pouvant être réchauffée par un troisième échangeur thermique 23 interne. Ce dernier est inséré dans un deuxième circuit hydraulique solaire CS2, comprenant un circulateur C6 et un clapet-anti-retour 15, en série avec le troisième échangeur thermique 23. Les deux circuits hydrauliques solaires CS1 et CS2 sont raccordés en dérivation. Une deuxième vanne de distribution V2 est branchée entre le troisième échangeur thermique 23 et le capteur solaire thermique 12 pour diriger le fluide caloporteur en provenance des zones de chauffage ZCH1, ZCH2, ZCH3 des circuits élémentaires de chauffage CC1, CC2, CC3 vers le capteur solaire 12 ou vers un ballon de stockage 130 supplémentaire. Des capteurs de température T3, T4 sont prévus respectivement à l'entrée de la deuxième vanne de distribution V2, et en sortie du ballon de stockage 130 pour piloter le sens d'écoulement du fluide caloporteur. Un tel stockage supplémentaire permet d'accroître l'autonomie solaire et l'économie d'énergie.

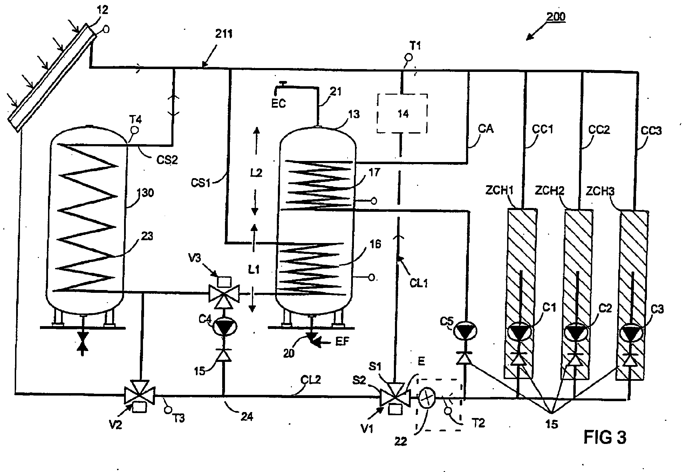

Selon l'installation de chauffage 200 de la figure 3, le circuit hydraulique 211 avec stockage supplémentaire est identique à celui 111 de la figure 2, avec en plus une troisième vanne de distribution V3 insérée entre les échangeurs thermiques 23, 16 des deux ballons de stockage 130, 13. Le circulateur C6 de la figure 2 peut alors être alors supprimé, seul est conservé le circulateur C4, raccordé entre la troisième vanne de distribution, et un noeud 24 commun entre les deux vannes de distribution V1 et V2.

Les installations 10, 100, 200 des figures 1 à 3 représentent différentes variantes avec un ballon de stockage 13 principal à accumulation, l'eau chauffée étant de l'eau sanitaire.

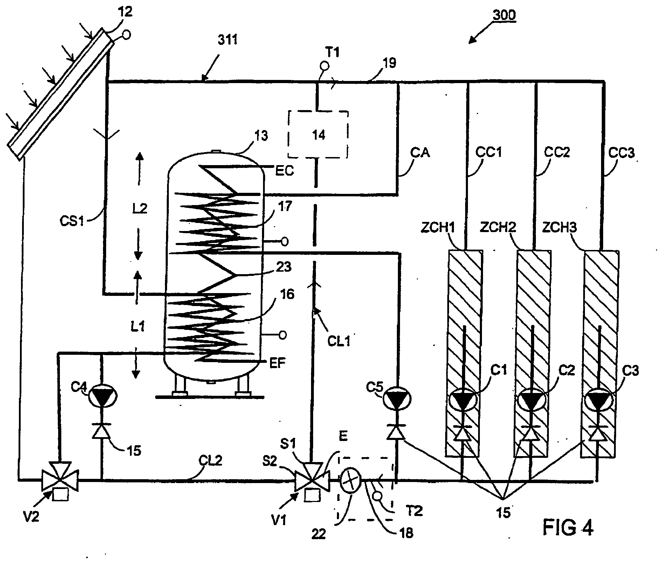

Il est également possible de stocker l'énergie du ballon de stockage 13 principal avec de l'eau morte ou autre élément de stockage thermique. De tels exemples sont illustrés dans les installations 300 et 400 des figures 4 et 5.

Selon l'installation 300 de la figure 4, le circuit hydraulique 311 est comparable à celui de la figure 1 ou 2, avec en plus la deuxième vanne de distribution V2 insérée dans la conduite de liaison CL2 entre le capteur thermique 12 et la première vanne de distribution V1. La deuxième vanne de distribution V2 est susceptible de diriger le fluide caloporteur en provenance des zones de chauffage ZCH1, ZCH2, ZCH3 des circuits élémentaires de chauffage CC1, CC2, CC3 vers le capteur solaire 12 ou vers le ballon de stockage 13 principal. Il en résulte une économie d'énergie grâce à la récupération de calories stockées utilisable en chauffage. Le troisième échangeur thermique 23 est placé dans ce cas à l'intérieur du ballon de stockage 13 principal, et est parcouru par de l'eau sanitaire EF, EC.

## Revendications

1. Installation (10, 100, 200, 300) mixte de chauffage solaire et de production d'eau chaude sanitaire, comportant un circuit hydraulique (11, 111, 211, 311) à fluide caloporteur, raccordé à :
- un système de production d'énergie solaire ayant au moins un capteur solaire thermique (12),
- une source d'appoint (14) insérée dans un circuit hydraulique d'appoint (CA),
- un ballon de stockage (13) renfermant une première zone de chauffage solaire (L1), et une deuxième zone de chauffage d'appoint (L2),
- et des moyens hydrauliques de guidage comprenant une première vanne de distribution (V1) pour diriger le fluide caloporteur circulant dans des circuits élémentaires de chauffage (CC1, CC2, CC3) vers l'énergie solaire ou vers l'énergie d'appoint,
**caractérisée en ce que** les circuits élémentaires de chauffage (CC1, CC2, CC3), et le circuit hydraulique d'appoint (CA) sont tous raccordés en dérivation du même côté de la vanne de distribution (V1) pour que l'énergie solaire en provenance du capteur solaire thermique (12) puisse chauffer les zones de chauffage (ZCH1, ZCH2, ZCH3) sans passer par la source d'appoint (14), et que la source d'appoint (14) puisse alimenter lesdites zones de chauffage sans passer dans le ballon de stockage (13).

2. Installation (10, 100, 200, 300) mixte de chauffage solaire et de production d'eau chaude sanitaire selon la revendication 1, **caractérisée en ce que** la première vanne de distribution (V1) est raccordée à la sortie des circuits élémentaires de chauffage (CC1, CC2, CC3) par un tuyau (18) de sortie commune sur lequel est monté un débitmètre (22) unique pour le comptage énergétique en provenance de l'énergie solaire et de l'énergie d'appoint.

3. Installation (10, 100, 200, 300) mixte de chauffage solaire et de production d'eau chaude sanitaire selon la revendication 2, **caractérisée en ce qu'**une première sonde de température (T1) est placée à l'entrée des circuits élémentaires de chauffage (CC1, CC2, CC3), et une deuxième sonde de température (T2) est prévue sur le tuyau inférieur (18) avant le débitmètre (22).

4. Installation (10, 100, 200, 300) mixte de chauffage solaire et de production d'eau chaude sanitaire selon la revendication 1 ou 2, **caractérisée en ce que** la source d'appoint (14) est raccordée dans une conduite de liaison (CL1) d'une part à l'entrée des circuits élémentaires de chauffage (CC1, CC2, CC3), et d'autre part à l'une des sorties (S1) de la première vanne de distribution (V1).

5. Installation (10) mixte de chauffage solaire et de production d'eau chaude sanitaire selon la revendication 4, **caractérisée en ce que** le capteur solaire thermique (12) est raccordé à l'entrée des circuits élémentaires de chauffage (CC1, CC2, CC3) et est en liaison avec l'autre sortie (S2) de la première vanne de distribution (V1).

6. Installation (100, 200, 300) mixte de chauffage solaire et de production d'eau chaude sanitaire selon la revendication 4, **caractérisée en ce que** le capteur solaire thermique (12) est raccordé à l'entrée des circuits élémentaires de chauffage (CC1, CC2, CC3), et est en liaison avec une deuxième vanne de distribution (V2) raccordée soit au ballon de stockage (13) principal, soit à un ballon de stockage supplémentaire (130).

7. Installation (10, 100, 200) mixte de chauffage solaire et de production d'eau chaude sanitaire selon la revendication 5, **caractérisée en ce que** le ballon de stockage (13) à accumulation renferme à la partie inférieure un premier échangeur thermique (16) raccordé hydrauliquement au capteur solaire thermique (12) dans un premier circuit hydraulique solaire (CS1), et qu'un deuxième échangeur thermique (17) situé à la partie supérieure, est inséré dans un circuit hydraulique d'appoint (CA) raccordé en parallèle avec les circuits élémentaires de chauffage (CC1, CC2, CC3).

8. Installation mixte de chauffage solaire et de production d'eau chaude sanitaire selon l'une des revendications précédentes, **caractérisée en ce que** le même fluide caloporteur circule dans le capteur solaire thermique (12), les ballons de stockage (13, 130), la source d'appoint (14) et les circuits élémentaires de chauffage (CC1, CC2, CC3).

## Patentansprüche

1. Solaranlage (10, 100, 200, 300) zum Heizen und zur Erzeugung warmen Brauchwassers (11, 111, 211, 311) mittels eines Wärmeträgermediums, angeschlossen an:
- ein System zur Erzeugung von Solarenergie mit mindestens einem solarthermischen Kollektor (12),
- eine Hilfsquelle (14), die in einen hydraulischen Hilfskreislauf (CA) eingebunden ist,
- einen Speicherbehälter (13), der einen ersten Solarheizungsbereich (L1) und einen zweiten Hilfs-Solarheizungsbereich (L2) einschließt,
- und hydraulische Steuerungsmittel, die ein erstes Steuerventil (V1) zum Leiten des Wärmetransportmediums, das in elementaren Heizkreisen (CC1, CC2, CC3) zirkuliert, in Richtung auf die Sonnenenergie oder Hilfsenergie,
**dadurch gekennzeichnet, dass** die elementaren Heizkreise (CC1, CC2, CC3) und der hydraulische Hilfskreislauf (CA) alle verzweigt auf der gleichen Seite des Steuerventils (V1) angeschlossen sind, damit die vom solarthermischen Kollektor (12) kommende Sonnenenergie die Heizzonen (ZCH1, ZCH2, ZCH3) ohne Umweg über die Hilfsquelle (14) beheizen kann und die Hilfsquelle (14) die Heizzonen ohne Umweg über den Vorratsbehälter (13) versorgen kann.

2. Solaranlage (10, 100, 200, 300) zum Heizen und zur Erzeugung warmen Brauchwassers nach Anspruch 1, **dadurch gekennzeichnet, dass** das erste Steuerventil (V1) mit dem Ausgang der elementaren Heizkreise (CC1, CC2, CC3) mittels eines Rohrs (18) mit gemeinsamem Ausgang angeschlossen ist, an das ein einziger Durchflussmesser (22) zum Messen der aus Sonnenenergie und Hilfsenergie gespeisten Energie montiert ist.

3. Solaranlage (10, 100, 200, 300) zum Heizen und zur Erzeugung warmen Brauchwassers nach Anspruch 2, **dadurch gekennzeichnet, dass** eine erste Temperatursonde (T1) am Eingang der elementaren Heizkreise (CC1, CC2, CC3) platziert und eine zweite Temperatursonde (T2) am unteren Rohr (18) vor dem Durchflussmesser (22) vorgesehen ist.

4. Solaranlage (10, 100, 200, 300) zum Heizen und zur Erzeugung warmen Brauchwassers nach Anspruch 1 oder 2, **dadurch gekennzeichnet, dass** die Hilfsquelle (14) in einer Verbindungsleitung (CL1) einerseits am Eingang der elementaren Heizkreise (CC1, CC2, CC3) und andererseits an einem der Ausgänge (S1) des ersten Steuerventils (V1) angeschlossen ist.

5. Solaranlage (10) zum Heizen und zur Erzeugung warmen Brauchwassers nach Anspruch 4, **dadurch gekennzeichnet, dass** der solarthermische Kollektor (12) an den Eingang der elementaren Heizkreise (CC1, CC2, CC3) angeschlossen und mit dem anderen Ausgang (S2) des ersten Steuerventils (V1) verbunden ist.

6. Solaranlage (100, 200, 300) zum Heizen und zur Erzeugung warmen Brauchwassers nach Anspruch 4, **dadurch gekennzeichnet, dass** der solarthermische Kollektor (12) an den Eingang der elementaren Heizkreise (CC1, CC2, CC3) angeschlossen ist und in Verbindung steht mit einem zweiten Steuerventil (V2), das entweder mit dem Haupt-Vorratsbehälter (13) oder einem zusätzlichen Vorratsbehälter (130) verbunden ist.

7. Solaranlage (100, 200, 200) zum Heizen und zur Erzeugung warmen Brauchwassers nach Anspruch 5, **dadurch gekennzeichnet, dass** der Vorrats-Speicherbehälter (13) in seinem unteren Teil einen ersten Wärmetauscher (16) umfasst, der hydraulisch an den solarthermischen Kollektor (12) in einem ersten Hydrauliksolarkreis (CS1) angeschlossen ist, und dass ein zweiter, im oberen Teil gelegener Wärmetauscher (17) in einen Hydraulikhilfskreis (CA) integriert ist, der mit den elementaren Heizkreisen (CC1, CC2, CC3) parallelgeschaltet ist.

8. Solaranlage zum Heizen und zur Erzeugung warmen Brauchwassers nach einem der vorstehenden Ansprüche, **dadurch gekennzeichnet, dass** im solarthermischen Kollektor (12), in den Vorratsbehältern (13, 130), der Hilfsquelle (14) und den elementaren Heizkreisen (CC1, CC2, CC3) ein und dasselbe Wärmeträgermedium zirkuliert.

## Claims

1. A combined solar heating and domestic hot water production installation (10, 100, 200, 300) comprising a hydraulic circuit (11, 111, 211, 311) containing a heat-transfer fluid connected to:
- a solar energy production system having at least one thermal solar collector (12),
- an auxiliary source (14) inserted in an auxiliary hydraulic circuit (CA),
- a storage tank (13) containing a first solar heating zone (L1), and a second auxiliary heating zone (L2),
- and hydraulic guiding means comprising a first distribution valve (V1) for directing the heat-transfer fluid circulating in individual heating circuits (CC1, CC2, CC3) to solar energy or to auxiliary energy,
**characterized in that** the individual heating circuits (CC1, CC2, CC3) and the auxiliary hydraulic circuit (CA) are connected in parallel on the same side of the distribution valve (V1) so that the solar energy from solar thermal collector (12) can heat the heating zones (ZCH1, ZCH2, ZCH3) without passing through the auxiliary source (14), and so that the auxiliary source (14) can feed said heating zones without passing through the storage tank (13).

2. A combined solar heating and domestic hot water production installation (10, 100, 200, 300) according to claim 1, **characterized in that** the first distributor valve (V1) is connected to the output of the individual heating circuits (CC1, CC2, CC3) via a common outlet pipe (18) on which is mounted a single flow meter (22) for energy metering from solar energy and auxiliary energy.

3. A combined solar heating and domestic hot water production installation (10, 100, 200, 300) according to claim 2, **characterized in that** a first temperature sensor (T1) is provided at the input of the individual heating circuit (CC1, CC2, CC3), and a second temperature sensor (T2) is provided on the lower pipe (18) before the flow meter (22).

4. A combined solar heating and domestic hot water production installation (10, 100, 200, 300) according to claim 1 or 2, **characterized in that** the auxiliary source (14) is connected in a connecting line (CL1) on the one hand to the input of the individual heating circuits (CC1, CC2, CC3), and on the other hand to one of the outputs (S1) of the first distributor valve (V1).

5. A combined solar heating and domestic hot water production installation (10) according to claim 4, **characterized in that** the solar thermal collector (12) is connected to the input of the individual heating circuits (CC1, CC2, CC3) and is in connection with the other output (S2) of the first distributor valve (V1).

6. A combined solar heating and domestic hot water production installation (100, 200, 300) according to claim 4, **characterized in that** the solar thermal collector (12) is connected to the input of the individual heating circuits (CC1, CC2, CC3), and is in connection with a second distribution valve (V2) connected either to the main storage tank (13) or to an additional storage tank (130).

7. A combined solar heating and domestic hot water production installation (10, 100, 200) according to claim 5, **characterized in that** the storage tank (13) comprises in the lower part a first heat exchanger (16) hydraulically connected to the solar thermal collector (12) in a first solar hydraulic circuit (CS1), and **in that** a second heat exchanger (17) located in the upper part is inserted in an auxiliary hydraulic circuit CA) connected in parallel to the individual heating circuits (CC1, CC2, CC3).

8. A combined solar heating and domestic hot water production installation according to one of the preceding claims, **characterized in that** the same heat-transfer fluid circulates in the solar thermal collector (12), the storage tanks (13, 130), (14) and the individual heating circuits (CC1, CC2, CC3).
